# EUROPÄISCHE PATENTANMELDUNG

(11) **EP 1 923 117 A2**
(43) Veröffentlichungstag der Anmeldung: **21.05.2008**
(21) Anmeldenummer: 06784093.4
(22) Anmeldetag: 03.08.2006
(51) Int. Cl.: B01D 39/16, B01D 39/06, D06M 11/83, B01J 20/26

(54) **FILTERMATERIAL UND VERFAHREN ZU DESSEN HERSTELLUNG, FILTER UND FILTRIERVERFAHREN**

(30) Priorität: 08.08.2005 RU 2005125140
(71) Anmelder: Institute of Strength Physics and Materials Science Siberian Branch of the Russian Academy of Sciences, Tomsk 634021 (RU); Advanced Powder Technologies, LLC, Tomsk 634021 (RU)
(72) Erfinder: PSAKHIE, Sergey Grigorievich, Tomsk, 634055 (RU); SVAROVSKAYA, Natalia Valentinovna, Tomsk, 634061 (RU); PUGACHEV, Vladimir Georgievich, Novosibirsk, 630559 (RU); REPIN Vladimir Evgenievich, Novosibirsk, 630559 (RU); LERNER, Marat Izrailievich, Tomsk, 634041 (RU); RUDENSKIY, Gennady Evgenievich, Tomsk, 634055 (RU)
(74) Vertreter: Jeck, Anton
(86) Internationale Anmeldenummer: PCT/RU2006/000410
(87) Internationale Veröffentlichungsnummer: WO 2007/018454

(57) **Zusammenfassung**

Die Erfindung gehört zur Herstellung von Filtermaterialien für die Reinigung und Entkeimung von Wasser, Wasserlösungen und anderen Flüssigkeiten sowie für die Sterilfiltration von Injektions- und anderen Lösungen, für die Konzentrierung von Biomolekülen in physiologischen Flüssigkeiten, für die Konzentrierung und Entfernung von Viren sowie für die Herstellung von apyrogenem Wasser in biokatalytischen Membranreaktoren.

Die Erfindung löst die Aufgabe durch Herstellung eines neuen Filtermaterials, das über hohe Sorptionseigenschaften, ein hohes Rückhaltungsvermögen der elektronegativen Submikrometerpartikeln, Mikroorganismen, unpolaren Submikrometerpartikeln, chemischen Verschmutzungen und zugleich über einen niedrigen Wasserwiderstand verfügt.

Als Basis für das Filtermaterial dient ein organischer Polymerkunststoff, der mit auf der Basisfasernoberfläche angesetzten Aluminiumoxidhydratpartikeln modifiziert wird, um die Sorptionseigenschaften des Filtermaterials zu verbessern und diesem eine Positivladung zu verleihen.

## Beschreibung

### Erfindungsgebiet

Die Erfindung bezieht sich auf die Herstellung von Filtermaterialien mit hohen Adsorptions- und Filtereigenschaften, und zwar auf die Herstellung von Filtermaterialien auf der Basis von synthetischen Polymerfasern für die Feinreinigung und Entkeimung von Wasser, von Wasserlösungen und anderen Flüssigkeiten sowie für die Verwendung auf den Gebieten der Medizin und Mikrobiologie für die Sterilfiltration von Injektions- und anderen Lösungen, für die Konzentrierung von Biomolekülen in physiologischen Flüssigkeiten, für die Konzentrierung und Entfernung von Viren und für die Herstellung apyrogenen Wassers in biokatalytischen Membranreaktoren.

### Stand der Technik

Durch den Artikel von Petrjanow, P. 1. Basmanow, W. 1. Kiritschenko, J. N. Filatow, J. L. Jurow mit dem Titel "Intensive Gasreinigung von Aerosolen durch Filter", M.: Nauka, 2003, 271 S., sind nach dem Elektrospinverfahren hergestellte, nicht gewebte Materialien aus dünnen Polymerfasern, die so genannten Stoffe (Filter), bekannt. Die Aufgabe dieser Materialien ist die Gas- und Flüssigkeitsfiltration und die bakterielle Gasreinigung. Die Eigenschaften dieser Materialien beruhen auf der Adhäsion der Partikel von unerwünschten Komponenten in der Flüssigkeit und im Gas auf den Filterfasern beim Zusammenstoß dieser Partikel und Filterfasern. Sie sind aber bei der Wasserreinigung einer pathogenen Flora aufgrund der schwachen Adhäsion von Mikroorganismen an den Filterfasern im Wassermedium wenig wirksam.

Durch die RU 2075345 C1, 1997, ist ein Herstellungsverfahren eines Adsorptionsmittels bekannt, bei dem ein durch eine elektrische Explosion eines Aluminiumdrahts in einem Argonmedium hergestelltes, ultradisperses Aluminiumpulver mit einer spezifischen Oberfläche von 5 - 20 m²/g mit Wasser bei einer Temperatur von 50 - 60 °C behandelt und danach bei einer Temperatur von 300 - 500 °C binnen 1 - 3 Stunden kalziniert wird.

Derartige Absorptionsmittel auf der Basis ultradisperser Aluminiumoxide besitzen ein hohes Sorptionsvermögen gegenüber wasserlöslichen Erdölprodukten, Phenolen und Schwermetallen.

Durch die RU 2168357 C2, 2001, ist ein Herstellungsverfahren eines Absorptionsmittels auf der Basis von Oxidmaterialien bekannt, bei dem das durch eine elektrische Explosion eines Aluminiumdrahts in Argonmedium hergestelltes, ultradisperses Aluminiumpulver mit einer spezifischen Oberfläche von 5 - 20 m²/g mit Wasser bei 5 - 60 C° behandelt und danach bei 300 - 500 C° binnen 1 - 3 Stunden kalziniert, in einer gesättigten Natriumhydrogenkarbonatlösung binnen 0,5 - 1,5 Stunden gekocht und bei 200 - 300 C° nochmalig kalziniert wird.

Das letztgenannte Verfahren verbessert die Adsorptionsfähigkeit des Pulvers gegenüber Phenolen, Schwermetallen und Halogenen ohne Senkung der Adsorptionsfähigkeit gegenüber wasserlöslichen Erdölprodukten.

Durch die RU 94003073 A, 1995, ist ein Verfahren einer komplexen Feinreinigung stark verschmutzten Wassers bekannt. Die Aufgabe der Erfindung besteht darin, Wasser für Haushaltbedürfnisse vorwiegend in Havariesituationen zu reinigen. Zweck der Erfindung ist eine Wirksamkeitssteigerung des Reinigungsprozesses stark verschmutzten Wassers von Erdölprodukten und Mineralverschmutzungen. Dabei wird stark verschmutztes Wasser zuerst durch eine aktivierte Zellstoffschicht mit fünfprozentigem, oxidierten, ataktischen Polypropylen, dann durch eine Schicht eines durch Oxidation im Wassermedium eines ultradispersen Aluminiumpulvers hergestellten, aktiven Aluminiumoxids serienweise durchgelassen.

Durch die SU 1066942 A, 1982, ist ein Verfahren zur Wasserreinigung von Viren bekannt. Bei diesem Verfahren wird für die Wasserreinigung von Enteroviren mit einer Partikelgröße von 20 - 30 nm ein anorganisches Adsorptionsmittel verwendet, nämlich hydrothermal behandeltes Aluminiummonohydroxid (AIOOH; Böhmit) mit einer Porengröße von 60 - 90 nm. Das Verfahren erlaubt, eine hundertprozentige Reinigung bei einer Virenkonzentration in Wasser von 1,5 - 6,28 lg GKID_{50/ml} bei einem pH-Wert von 7,0 - 7,5 durchzuführen.

Ein Nachteil dieses Verfahrens ist die Notwendigkeit eines dauerhaften Kontakts von 2 - 6 Stunden zwischen dem virenhaltigen Wasser und dem Adsorptionsmittel. Die Verwendung des in der RU 94003073 A, 1995, beschriebenen Verfahrens und der Adsorptionsmittel der RU 2075345 C1, 1997, und RU 2168357 C2, 2001, für eine Wassereinigung erfordert aufgrund des hohen Wasserwiderstands der Adsorptionsmittelschicht die Anwendung hohen Druckes. Dabei werden die Adsorptionmittel mit dem Flüssigkeitsstrom durch die Filtertrennwände weggeschwemmt. Außerdem erfordern alle Verfahren eine Kalzinierungsphase des Adsorptionsmittels bei 200 - 300 °C, wodurch das Produkt verteuert wird.

Durch die US 6838005 B1, 2005, ist ein Herstellungsverfahren eines elektropositiven Sorptionsmittels bekannt, das eine Mischung nicht sphärischer Aluminiumoxidpartikel oder eines Stoffes auf Aluminiumbasis einschließt, das danach mit einer Wasserlösung und Bildung nicht sphärischer Aluminiumsoxidpartikel mit einem zweiten Festbestandteil (Faserstoffpartikeln) reagiert. Aus der hergestellten Mischung wird nach einem Herstellungsverfahren aus der Papiertechnologie das Filtermaterial gebildet.

Durch die RU 2242276 C1, 2004, ist ein Sorptionsmittel aus nicht sphärischen Aluminiumsoxidpartikeln und Faserstoffpartikeln bekannt, das einen Bestandteil mit negativ geladener Oberfläche aus der Gruppe enthält. die Magnesiumoxid oder - hydroxid bzw. Siliziumoxid oder -hydroxid oder eine Mischung dieser Oxide als Modifikationsmittel aufweist. Das Herstellungsverfahren des Sorptionsmittels besteht aus einer Mischung nicht sphärischer Aluminiumoxidpartikel mit Fasermaterialpartikeln. Vor der Mischung wird dem Fasermaterial ein Bestandteil mit negativ geladener Oberfläche zugegeben; nach der Mischung aller drei Bestandteile wird das Modifikationsmittel beigemischt. Außerdem wird die Mischung durch elektrischen Strom oder Ultraschall aktiviert. Danach wird aus der hergestellten Mischung nach einem Herstellungsverfahren aus der Papiertechnologie das Filtermaterial gebildet.

Ein Hauptnachteil der oben genannten Sorptionsmittel ist die Verwendung des Mikrofaserglases in der US 6838005 B1 und des Zellstoffs in der RU 2242276 C1 als faserige Basis. Das Faserglas kann beim Eindringen seiner Partikel in die gefilterte Flüssigkeit gefährlich sein, und der Zellstoff ist ein Nährboden für Bakterien und deshalb für die Verwendung in Filtern mit Langzeitwirkung unerwünscht. Außerdem beschränkt die Filtermaterialherstellung nach einem Herstellungsverfahren aus der Papiertechnologie die Materialauswahl, das sich als zweiter Festbestandteil (der faserigen Basis) verwenden lässt, weil alle Mischungsbestandteile als Suspension einzelner Kleinpartikel benutzt werden. Bei einer Verwendung von Polymerfasern mit einem Durchmesser von < 2 µm ist es sehr kompliziert, mechanisch festes Filtermaterial nach einem Herstellungsverfahren aus der Papiertechnologie herzustellen. Jedoch besitzen gerade diese Materialien die für die Filtermaterialienherstellung bevorzugten Eigenschaften.

Ein bedeutender Nachteil des Herstellungsverfahrens eines Sorptionsmittels gemäß der RU 2242276 C1 ist die Notwendigkeit, die Mischung durch elektrischen Strom oder Ultraschall zu aktivieren, wodurch die Herstellungstechnologie kompliziert und teuer ist.

Durch die RU 2135262 C1, 1999, ist ein Modifizierungsverfahren eines Filterelements bekannt, das eine Tränkung des Filterelementhalbzeugs einschließt. Die Probe wird aus einem zu den Polymerkunststoffen gehörenden, nicht gewebten Stoff auf der Basis von Kohlenstoff und einem Modifikationsmittel (wasserorganische Lösung nanostrukturierter Silberpartikel) gebildet. Das nach diesem Verfahren hergestellte Filterelement erlaubt, die im Wasser vorhandenen, mikrobiologischen Fremdstoffe abzufiltern.

Wie in der Beschreibung angegeben, bleiben im Filtrat nach einer Behandlung der Kohlenstofffaser mit Silberlösung mindestens um zwei Größenordnungen weniger lebensfähige Bakterienzellen übrig als bei einer Verwendung von unbehandeltem Material aufgrund mikrobizider Eigenschaften der Silberpartikel. Durch Bakterienabtötung entstandene Toxine bleiben im Filtrat. Die Verringerung der Bakterienzellkonzentration um zwei Größenordnungen ist bei hoher Mikroorganismenkonzentration in der Ausgangsflüssigkeit, beispielsweise 10⁴ CFU/ml, ungenügend. Außerdem ist die Kohlenstofffaser ein teures Material.

### Offenbarung der Erfindung

Die Aufgabe der Erfindung besteht darin, ein neues Filtermaterial herzustellen, das über hohe Sorptionseigenschaften, ein hohes Rückhaltevermögen der elektronegativen Submikrometerpartikel, Mikroorganismen, unpolaren Submikrometerpartikel und chemischen Verschmutzungen sowie gleichzeitig über einen niedrigen Wasserwiderstand verfügt.

Diese Aufgabe wird dadurch gelöst, dass das Filtermaterial als Basis Fasern organischem nicht gewebtem Polymerkunststoff enthält, auf dessen Fasern Aluminium-oxidhydratpartikel sitzen.

Es ist zweckmäßig, dass als organischer, nicht gewebter Polymerkunststoff ein Material gewählt wird, dass nach dem Elektrospinnverfahren hergestellt wird, vorzugsweise aus Azetylzellulose oder Polysulfon mit einem Faserdurchmesser von 1,0 - 3,0 µm.

Es ist zweckmäßig, dass die auf der Faseroberfläche des organischen, nicht gewebten Polymerkunststoffes sitzenden Aluminiumoxidhydratpartikel eine Größe von 0,2 - 5,0 µm, eine spezifische Oberfläche von 100 - 250 m²/g und eine Porösität von 50 - 95 % aufweisen.

Es ist anzustreben, dass sich die Aluminiumoxidhydratpartikel sowohl auf der Oberfläche als auch innerhalb des organischen, nicht gewebten Polymerkunststoffes absetzen. Die Anzahl der auf den Azetylzellulose- oder Polysulfonfasern sitzenden Aluminiumoxidhydratpartikel soll 15-45 Gew.-% betragen.

Diese Aufgabe wird dadurch gelöst, dass ein Modifikationsmittel auf eine faserige Basis aus nicht gewebtem Polymerkunststoff bei der Filtermaterialherstellung aufgetragen wird.

Neu ist, dass als Basis ein organischer, nicht gewebter Polymerkunststoff verwendet wird. Dabei enthält das Modifikationsmittel Aluminiumstoffpartikei, aufgrund deren Hydrolyse die Aluminiumoxidhydratpartikeln auf den Basisfasern gebildet werden und sich daran festsetzen.

Es ist zweckmäßig, dass der organische, nicht gewebte Polymerkunststoff mit einem Faserdurchmesser von 1,0 - 3,0 µm nach dem Elektrospinnverfahren hergestellt wird, vorzugsweise aus Azetylzellulose oder Polysulfon. Als Basismaterial wird Aluminiumpulver mit einer Partikelgröße von < 1 µm verwendet. Dieses durch eine elektrische Explosion eines Drahts hergestellte Aluminiumpulver besitzt eine spezifische Oberfläche von 7 - 28 m²/g.

Außerdem wird das Material auf Aluminiumbasis in Form einer wässrigen oder wässrig-alkoholischen Suspension auf die faserige Basis aufgetragen. Zusätzlich wird eine Hydrolyse des Aluminiummaterials bei 10 - 100 °C, vorzugsweise 50 - 70 °C, binnen 10 Minuten bis 48 Stunden, vorzugsweise 30 - 60 Minuten, durchgeführt. Danach wird das Filtermaterial mit Wasser gespült, um die auf den Basisfasern nicht haftenden Aluminiumoxidhydratpartikel zu entfernen.

Weiterhin beinhaltet die Erfindung ein Filtrationsverfahren eines flüssigen Mediums, das den Kontakt zwischen dem zu reinigenden, flüssigen Medium und dem Filtermaterial gewährleistet.

Neu ist, dass als Filtermaterial ein organischer, nicht gewebter Polymerkunststoff verwendet wird, auf dessen Fasern sich Aluminiumoxidhydratpartikel absetzen.

Es ist zweckmäßig, dass der organische, nicht gewebte Polymerkunststoff nach einem Elektrospinnverfahren hergestellt wird, vorzugsweise aus Azetylzellulose oder Polysulfon. Die Anzahl der Aluminiumoxidhydratpartikel beträgt 80-180 mg/cm² pro Filtermaterialoberflächeneinheit.

Dabei hält das Filtermaterial elektronegative Partikel zurück, beispielsweise Bakterien, Viren, Kolloidpartikel, pyrogene Stoffe, Nukleinsäuren, Einweißstoffe u.v.m. Weiterhin sterilisiert das Filtermaterial das Wasser. Außerdem hält das Filtermaterial unpolare Partikel und chemische Verschmutzungen, beispielsweise Partikel unlösbarer Oxide und Hydroxide, wasserlösliche Erdölprodukte, Phenole, Halogene und Schwermetallionen zurück. Das Filtermaterial wird bei komplexer Wasserreinigung eingesetzt. Das erwähnte, flüssige Medium besteht aus Wasser, Wasserlösung und Körperflüssigkeiten. In der Praxis gehört das Filtermaterial zu mehreren Filterbestandteilen.

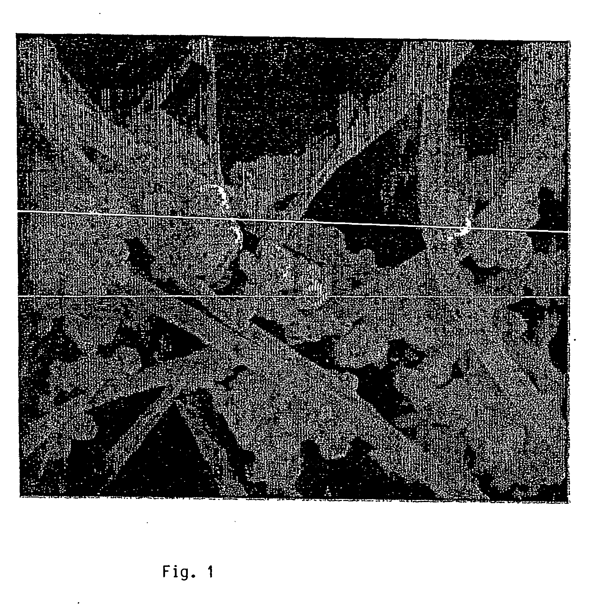

Das Verfahren wird nun anhand von Ausführungsbeispielen und der fotografischen Darstellung in Figur 1 näher erläutert. Es zeigen:
- Fig. 1: eine Mikroaufnahme von durch Aluminiumoxidhydratpartikel modifizierte Trägervliesfasern.

Der Stoff, der ein hohes Rückhaltungsvermögen für elektronegative Submikrometerpartikel, darunter Mikroorganismen, unpolare Submikrometerpartikel, chemische Verschmutzungen und zugleich einen niedrigen Wasserwiderstand besitzt, verfügt über eine Oberfläche mit hoher Positivladung auf der Partikeloberfläche und über eine hohe Porosität. Die entwickelte Oberfläche mit positiver Ladung beinhaltet das durch eine Aluminiumnanopulverhydrolyse hergestellte Aluminiumoxidhydrat. Bei einer Verwendung dieses Sorptionsmittels in den Filtern als Pulverschicht auf einem Filtermittel entstehen zwei wesentliche Probleme, die durch Submikrometergröße der Sorptionsmittelpartikel verursacht werden, nämlich ein hoher Wasserwiderstand der Sorptionsmittelschicht und eine Migration der Sorptionsmittelpartikel durch die porösen Filtermittel ins Filtrat. Eine mechanische Mischung des Sorptionsmittels mit einem inerten, faserigen Stoff oder der Wechsel der Sorptionsmittel- und Faserstoffschichten erlaubt, diese negative Erscheinungen, besonders am Anfang des Filterbetriebs, zu vermindern, jedoch werden diese Probleme noch nicht völlig gelöst. Die Sorptionsmittelpartikel werden mit dem Strom der zu filtrierenden Flüssigkeit ausgespült, sie migrieren durch die Faserstoffschichten, verdichten sich und bilden einen hohen Wasserwiderstand.

Die technische Lösung besteht darin, dass Aluminiumnanopulverpartikel auf Basisfasern aus synthetischem Polymermaterial im Wassermedium aufgetragen werden. Dabei werden Polymermaterialien gewählt, die im Wassermedium eine Negativladung aufweisen, beispielsweise Azetylzellulose oder Polysulfon. Bei einer anschließendern Hydrolyse werden aus den Aluminiumnanopulverpartikeln elektropositive Partikel gebildet, die aus verschiedenen oxid-hydroxiden Aluminiumphasen bestehen, die in dieser Erfindung als Aluminiumoxidhydrat bezeichnet werden. Diese elektropositiven Partikel haften an den negativ geladenen Fasern des organischen Basispolymerkunststoffes, und durch die dabei entstehenden Adhäsionskräfte setzen sie sich darauf ab. Dabei nimmt die spezifische Oberfläche der Basis zu, und es entsteht eine zusätzliche Porosität des gesamten Filtermaterials.

Als Basis kann faseriges Folienmaterial, beispielsweise der nach dem Elektrospinnverfahren hergestellte Polymerkunststoff, verwendet werden. Dadurch wird ein Verbundwerkstoff hergestellt, der ein dreidimensionales Gerüst polymerer Mikrofasern darstellt, an deren Berührungsstellen eine Vielzahl poröser Partikel sitzt, die durch Aluminiumoxidhydratnanofasern gebildete Sinteragglomerate darstellen. Jeder Teil des hergestellten Verbundwerkstoffes erfüllt seine eigene Funktion. Der Polymerkunststoff verfügt über eine hohe Porosität und stellt die notwendige Filtrationsgeschwindigkeit sicher. Die durch Adhäsionskräfte auf der Basisfaseroberfläche sitzenden Aluminiumoxidhydratsinteragglomerate verringern die Filtrationsgeschwindigkeit nicht, sie migrieren nicht ins Filtrat und verleihen dem Stoff hohe Sorptionseigenschaften, darunter die Fähigkeit, Mikroorganismen aufzufangen. Somit vereinigt der Verbundwerkstoff positive Eigenschaften beider Bestandteile in sich, nämlich die mechanische Festigkeit, Beständigkeit gegen Filtrationsmediumeinwirkung, hohe Filtrationsgeschwindigkeit und ein hohes Rückhaltevermögen verschiedener Schmutzstoffe, darunter auch mikrobiologischer Schmutzstoffe.

Gemäß der vorliegenden Erfindung wird ein faseriges Folienmaterial (nicht gewebter Stoff) aus synthetischen Polymerfasern mit einem Durchmesser von 1,0 - 3,0 µm als Trägervlies verwendet. Dieser Stoff ist nicht toxisch, wasserbeständig, hydrophil (kann mit hydrophilem Charakter ausgerüstet werden) und einer Schmelztemperatur über 110 °C. Ein Vorteil der Polymerfaserstoffe ist deren chemische und biologische Inaktivität und die Fähigkeit, die mechanische Festigkeit auch bei dauerhafter Anwesenheit von Wasser beizubehalten. Diese Stoffe sind gegen eine mikrobielle Zersetzung beständig, was bei der Herstellung von Wasserreinigungsfiltern sehr wichtig ist. Der Stand der Technik erlaubt es, aus den Polymerfasern porenreiche Stoffe mit einem niedrigen Luft- und Wasserwiderstand herzustellen, die für die Gas- und Flüssigkeitsreinigung geeignet sind. ("Intensive Gasreinigung von Aerosolen durch Filter", H. 1. Petrjanow, Basmanow, W. 1. Kiritschenko, J. N. Filatow, J. L. Jurow, M. Nauka, 2003, 271 Seiten).

Gemäß der vorliegenden Erfindung lassen sich als Sorptionsmittel für eine Fasermodifikation Aluminiumoxidhydratpartikel einsetzen, die durch eine Aluminiumnanopulverhydrolyse hergestellt wurden. Die mit einem Gasphasen- oder mechanochemischen Verfahren hergestellten Aluminiumnanopulver lassen sich als Material auf Aluminiumbasis benutzen. Besonders geeignet sind Aluminiumnanopulver, die durch elektrische Explosion eines Drahts hergestellt werden. Diese Pulver besitzen ein hohes Reaktionsvermögen, deshalb reagieren sie leicht mit Wasser bei 40 - 60 °C. Das Hydrolyseprodukt ist Aluminiumoxidhydrat mit einer spezifischen Oberfläche von 100 - 250 m²/g und hohen Sorptionseigenschaften (RU 2075345 C1, 1997; RU 2168357 C2, 2001).

Milde Bedingungen, eine Temperatur von 40 - 60 °C, unter der die Aluminiumnanopulverhydrolyse verläuft, lassen sich unmittelbar auf der Faseroberfläche des nach dem Elektrospinnverfahren hergestellten Polymerstoffes (Filter von Petrjanow) durchführen. Dabei findet kein Polymerabbau und keine Verletzung der Faserstruktur und des Stoffes selbst statt.

Aus dem umfangreichen Sortiment der Filter von Petrjanow wurden für die Herstellung nach der vorliegenden Erfindung als Filtermaterialien Polymerfilter mit höchster Wasseraufnahmefähigkeit und thermischer Widerstandsfähigkeit gewählt.

Vorzugsweise werden zwei Materialien verwendet:
a) nicht gewebtes Filtermaterial aus Azetylzellulose (FPA von 15-2,0), durchschnittlicher Faserdurchmesser 1,7 µm, Oberflächendichte 32 g/m², Verpackungsdichte 3,0 %, Standardwasserwiderstand 2,0 mm Wassersäule, Zweckbestimmung Gasfiltration;
b) nicht gewebtes Filtermaterial aus Polysulfon YUDEL-1700 (FPSF-6C), Oberflächendichte 28 g/m²; der Stoff besteht aus drei Schichten, wobei der durchschnittliche Faserdurchmesser der inneren Schicht 1 - 1,2 µm, der äußeren Schicht 2 - 2,5 µm, die Dichte der äußeren Schicht 9 g/m² und die Dichte der inneren Schicht 9 g/m² beträgt; die Zweckbestimmung ist eine Gas- und Flüssigkeitsfiltration und eine bakterielle Gasreinigung.

Die Erfindung ist in Fig. 1 dargestellt, die eine Mikroaufnahme von Basisfasern ist (FPA von 1,5 bis 2,0), die mit porösen Aluminiumoxidhydratpartikeln modifiziert sind.

Aus Fig. 1 ist ersichtlich, dass die Basisfaser mit darauf sitzenden, porösen Partikeln bedeckt ist, die einzelne und gruppierte Sinteragglomerate mit einer Größe von 0,2 - 5,0 µm aus Aluminiumoxidhydratnanofasern darstellen.

### Beispiel 1

Eine Suspension aus 180 ml destilliertem Wasser, 20 ml Alkohol und 2 g, durch eine elektrische Explosion eines Drahts hergestelltem Pulver AI/AIN mit einer spezifischen Oberfläche von 21 m²/g wird vorbereitet. Aus einem nicht gewebten Polysulfonstoff mit einer Oberflächendichte von 28 g/m² wird eine Probe mit einer Größe von 50 x 50 cm ausgeschnitten, in den Behälter mit der vorbereiteten Suspension hineingelegt und für 10 Minuten zur Tränkung bei Zimmertemperatur belassen. Dabei wird das Pulver auf den Fasern des nicht gewebten Stoffes adsorbiert und die Probe schwarz gefärbt. Dann wird die Probe dem Dehälter entnommen ausgepresst und gespült, um den Suspensionsüberschuss zu entfernen. Bei einer Aufheizung der Proben bis 57 °C beginnt eine Hydrolysereaktion, die von einer Entwicklung kleiner Ammoniak-und Wasserstoffmengen und einer Farbveränderung des Halbzeugs vom Schwarzen ins Weiße infolge der Umwandlung von Al/AIN in Aluminiumoxidhydrat weißer Farbe begleitet wird. Nach Abschluss der Hydrolyse wird die Probe im Trockenschrank noch für vier Stunden zur Trocknung belassen. Es wird ein Stoff gewonnen, der 27 Gew.-% Aluminiumoxidhydrat mit einer durchschnittlichen Partikelgröße von 0,8 µm, einer spezifischen Oberfläche von 180 m²/g und einer Porosität von 80 % enthält. Aus dem hergestellten Filtermaterial werden die Filter notwendiger Dicke durch das Aufschichten von 6, 8, 10 oder einer anderen Schichtanzahl der Filtermaterialien gebildet. Danach wird das Virenabsorptionsvermögen der hergestellten Filter geprüft. Die Ergebnisse sind in Tabelle 1 dargestellt. Zum Vergleich werden in Tabelle 1 die Prüfungsergebnisse eines Filters aus 6 Schichten unmodifizierten, nicht gewebten Polysulfonstoffs unter ähnlichen Bedingungen dargestellt.

Die Titration des Bakteriophagen MS2 in den Proben wird geprüft. Der Bakteriophag MS2 ist ein für den Menschen unschädlicher Mikroorganismus, der pathogene Viren imitiert. Jede Probe wird zwischen zwei Membranen gelegt, wobei der Porendurchmesser 0,45 µm beträgt, und in einer Fixierzelle eingeklemmt. Danach wird durch die Fixierzelle mit der Filtermaterialprobe 2 ml Bakteriophagensuspension durchgelassen. Die Bakteriophagkonzentration am Eingang und am Ausgang der Fixieranlage wird kontrolliert.

**Tabelle 1**

| MS2-Konzentration in der Ausgangssuspension, PFU/ml | MS2 aufgehalten, % | | | |
|---|---|---|---|---|
| | Polysulfonstoff, 6 Schichten | Modifizierter Polysulfonstoff | | |
| | | 6 Sorptionsmittel schichten, 60 mg/cm² | 8 Sorptionsmittelschichten, 80 mg/cm² | 12 Sorptions-mittelschichten, 120 mg/cm² |
| 1,4·10⁴ | 38,6 | 99,3 | 100 | 100 |
| 1,3·10⁵ | 15,4 | 99,6 | 99,8 | 100 |
| 1,0·10⁶ | 0 | 99,1 | 99,8 | 100 |

Durch Veränderung der Filterdicke kann eine notwendige Reinigungseffektivität bei verschiedenen Verschmutzungsgraden der zu reinigenden Flüssigkeit und bei verschiedenen Filtrationsgeschwindigkeiten erreicht werden.

Der Filter kann durch Aufschichten des Filtermaterials in mehrere Schichten mit oder ohne Kleben nach einem Verfahren gebildet werden, bei dem eine Löcherentstehung ausgeschlossen ist.

### Beispiel 2

Eine Suspension aus 200ml destilliertem Wasser und 2 g durch eine elektrische Explosion eines Drahts hergestelltem Pulver Al/AlN mit einer spezifischen Oberfläche von 21 m²/g wird vorbereitet. Aus Azetylzellulosestoff mit einer Oberflächendichte von 32 g/m² wird eine Probe mit einer Größe von 50 x 50cm ausgeschnitten, in den Behälter mit der vorbereiteten Suspension hineingelegt und für 10 Minuten zur Tränkung bei Zimmertemperatur belassen. Dann wird die Probe dem Behälter entnommen und gespült, um die nicht aufgenommenen Aluminiumoxidhydratpartikel zu entfernen. Die Hydrolyse und die Trocknung werden wie im Beispiel 1 durchgeführt. Es wird ein Stoff gewonnen, der 35 Gew.-% Aluminiumoxidhydrat mit einer durchschnittlichen Partikelgröße von 0,9µm, mit einer spezifischen Oberfläche von 185 m²/g und einer Porosität von 85 % enthält. Durch das Aufschichten von 14 Schichten des Filtermaterials werden Filter wie im Beispiel 1 gebildet, und das Virenabsorptionsvermögen dieser Filter wird geprüft. Die Ergebnisse sind in Tabelle 2 dargestellt.

**Tabelle 2**

| MS2-Konzentration in der Ausgangssuspension, PFU/ml | MS2 aufgehalten, % |
|---|---|
| 1,55×10⁴ | 100 |
| 2,50×10,⁵ | 100 |
| 3,75×10⁶ | 100 |
| 2,0×10⁷ | 99,9998 |

Das Filtermaterial weist eine durchschnittliche Porengröße von ca. 1 µm und somit einen niedrigen Wasserwiderstand sowie eine hohe Filtrationsgeschwindigkeit auf.

Die Filtrationsgeschwindigkeit in destilliertem Wasser bei verschiedenen Drücken ist in Tabelle 3 dargestellt.

**Tabelle 3**

| Filterdruck, atm | Filtrationsgeschwindigkeit, cm³/cm²/min |
|---|---|
| 0,5 | 33,5 |
| 0,75 | 47,7 |
| 1,0 | 63,6 |
| 1,5 | 86,8 |
| 2,0 | 103,2 |

### Beispiel 3

Eine Suspension aus 200 ml destilliertem Wasser und 2 g durch eine elektrische Explosion eines Drahts hergestelltem Pulver Al/AlN mit einer spezifischen Oberfläche von 15 m²/g und einer durchschnittlichen Partikelngröße von 150 nm wird vorbereitet. Aus Azetylzellulosestoff mit einer Oberflächendichte von 32 g/m² wird eine Probe mit einer Größe von 50 x 50 cm ausgeschnitten, in den Behälter mit der zubereiteten Suspension hineingelegt und für 10 Minuten zur Tränkung bei Zimmertemperatur belassen. Dabei wird das Pulver von den Vliesstofffasern adsorbiert und die Probe ins Schwarze verfärbt. Dann wird die Probe dem Behälter entnommen, ausgepresst, um den Suspensionsüberschuss zu entfernen, und in einen Behälter mit bis 60 °C erhitztem Wasser zur Hydrolyse des adsorbierten Aluminiumpulvers hineingelegt. Während der Hydrolyse entstehen auf der Halbzeugoberfläche Gasblasen (Wasserstoff), und die Probe ändert ihre Farbe von schwarz nach weiß. Nach Abschluss der Hydrolyse wird die Probe nach ungefähr 20 Minuten dem Behälter entnommen, in einen Behälter mit klarem Wasser übertragen und gespült, um die nicht aufgehaltenen Aluminiumoxidhydratpartikel zu entfernen. Dann wird die Hydrolyse wie in den Beispielen 1 und 2 durchgeführt und das hergestellte Filtermaterial bei einer Tempe ratur von 120 °C binnen 8 Stunden getrocknet. Es wird ein Stoff gewonnen, der 30 Gew.-% Aluminiumoxidhydrat mit einer durchschnittlichen Partikelgröße von 0,8 µm, einer spezifischen Oberfläche von 250 m²/g und einer Porosität von 95 % enthält. Aus dem hergestellten Filtermaterial wird ein Filter mit einer Stärke von 1,1 mm gebildet, und die Sorption von Schwermetallen, Phenolen und wasserlöslichen Erdölprodukten durch den hergestellten Filter wird geprüft; dies ist in Tabelle 4 dargestellt.

**Tabelle 4**

| Verschmutzung | Ausgangskonzentration, mg/l | Restkonzentration, mg/l |
|---|---|---|
| Fe | 0,5 | 0,05 |
| As | 0,04 | 0,003 |
| Ni | 0,5 | 0,08 |
| Hg | 0,01 | 0,0008 |
| Phenol | 0,005 | 0,001 |
| wasserlösliche Erdölprodukte | 0,01 | 0,001 |

### Gewerbliche Anwendbarkeit

Das gemäß der vorliegenden Erfindung hergestellte Filtermaterial besitzt hohe Adsorptions- und Filtrationseigenschaften, so dass es für eine Feinreinigung und Entkeimung von Wasser, Wasserlösungen und anderen Flüssigkeiten sowie auf den Gebieten der Medizin und Mikrobiologie, für eine sterilisierende Filtration von Injektions- und anderer Lösungen, für eine Konzentrierung von Biomolekülen in physiologischen Flüssigkeiten, eine Konzentrierung und Entfernung von Viren, die Herstellung apyrogenen Wassers, in biokatalytischen Membranreaktoren verwendet werden kann.

## Patentansprüche

1. Filtermaterial auf Basis von Fasern aus organischem, nicht gewebtem Polymerkunststoff,
**dadurch gekennzeichnet,**
**dass** Aluminiumoxidhydratpartikel auf den Fasern des erwähnten kunststoffs sitzen.

2. Filtermaterial nach Anspruch 1,
**dadurch gekennzeichnet,**
**dass** der organische, nicht gewebte Polymerkunststoff nach dem Elektrospinnverfahren hergestellt ist, vorzugsweise aus Azetylzellulose oder Polysulfon mit einem Faserdurchmesser von 1,0 - 3,0 µm.

3. Filtermaterial nach Anspruch 1 oder 2,
**dadurch gekennzeichnet,**
**dass** die auf der Faseroberfläche des organischen Polymerkunststoffes sitzenden Aluminiumoxidhydratpartikel eine Größe von 0,2 - 5,0 µm, eine spezifische Oberfläche von 100 - 250 m²/g und eine Porosität von 50 - 95 % aufweisen

4. Filtermaterial nach Anspruch 1,
**dadurch gekennzeichnet,**
**dass** die Aluminiumoxidhydratpartikel sowohl auf der Oberfläche als auch innerhalb des organischen, nicht gewebten Polymerkunststoffes anhaften.

5. Filtermaterial nach Anspruch 1,
**dadurch gekennzeichnet,**
**dass** die Anzahl der Aluminiumoxidhydratpartikel darin 15 - 45 Gew.-% beträgt.

6. Verfahren zur Herstellung eines Filtermaterials, bei dem ein Modifikationsmittel auf eine faserige Basis aus organischem Polymerstoff aufgetragen wird,
**dadurch gekennzeichnet,**
**dass** ein organischer Polymerkunststoff als Basis verwendet wird, wobei das Modifikationsmittel Aluminiumstoffpartikel enthält, infolge deren Hydrolyse die Aiuminiumoxidhydraipartikei auf den Trägervilesfasern gebildet werden und sich auf diesen Trägervliesfasern absetzen.

7. Verfahren nach Anspruch 6 ,
**dadurch gekennzeichnet,**
**dass** ein organischer, nach dem Elektrospinnverfahren hergestellter Polymerkunststoff mit einem Faserdurchmesser von 1,0 - 3,0 µm, vorzugsweise aus Azetylzellulose oder Polysulfon, verwendet wird.

8. Verfahren nach Anspruch 6 oder 7,
**dadurch gekennzeichnet,**
**dass** ein Aluminiumpulver mit einer Partikelgröße von weniger als 1 µm als Stoff auf Aluminiumbasis verwendet wird.

9. Verfahren nach Anspruch 8,
**dadurch gekennzeichnet,**
**dass** als Material auf Aluminiumbasis ein durch eine elektrische Explosion eines Drahts hergestelltes Aluminiumpulver mit einer spezifischen Oberfläche von 7 - 28 m²/g verwendet wird.

10. Verfahren nach Anspruch 6,
**dadurch gekennzeichnet,**
**dass** der Polymerkunststoff auf Aluminiumbasis in Form einer wässrigen oder wässrig-alkoholischen Suspension auf die faserige Basis aufgetragen wird.

11. Verfahren nach Anspruch 6,
**dadurch gekennzeichnet,**
**dass** die Hydrolyse des Polymerkunststoffs auf Aluminiumbasis bei einer Temperatur von 10 - 100 °C, vorzugsweise 50 - 70 °C, binnen 10 Minuten bis 48 Stunden, vorzugsweise 3ü - 60 Minuten, durchgeführt wird.

12. Verfahren nach einem der Ansprüche 6 bis 11,
**dadurch gekennzeichnet,**
**dass** nach Abschluss der Hydrolyse der Polymerkunststoff zum Entfernen der auf den Basisfasern nicht haftenden Aluminiumoxidhydratpartikel mit Wasser gespült wird.

13. Filtrationsverfahren, das den Kontakt zwischen einem flüssigen Medium und einem Filtermaterial sicherstellt,
**dadurch gekennzeichnet,**
**dass** als Filtermaterial ein organischer Polymerkunststoff verwendet wird, auf dessen Fasern sich Aluminiumoxidhydratpartikel absetzen.

14. Filtrationsverfahren nach Anspruch 13,
**dadurch gekennzeichnet,**
**dass** die Menge an Aluminiumoxidhydratpartikeln pro Oberflächeneinheit des nach dem Elektrospinnverfahren, vorzugsweise aus Azetylzellulose oder Polysulfon hergestellten Filtermaterials 80 - 180 mg/cm² beträgt.

15. Filtrationsverfahren nach Anspruch 13 oder 14,
**dadurch gekennzeichnet,**
**dass** das Filtermaterial elektronegative Partikel, beispielsweise Bakterien, Viren, Kolloidpartikeln, pyrogene Stoffe, Nukleinsäuren, Einweißstoffe usw., aufhält.

16. Filtrationsverfahren nach Anspruch 13 oder 14,
**dadurch gekennzeichnet,**
**dass** das Filtermaterial das Wasser sterilisiert.

17. Filtrationsverfahren nach Anspruch 13 oder 14,
**dadurch gekennzeichnet,**
**dass** das Filtermaterial die unpolaren Partikel und chemischen Verschmutzungen aufhält, vorzugsweise die Partikel von unlösbaren Oxiden und Hydroxiden, wasserlösliche Erdölprodukte, Phenole, Halogene und Schwermetallionen.

18. Filtrationsverfahren nach Anspruch 13,
**dadurch gekennzeichnet,**
**dass** das Filtermaterial zur komplexen Wasserreinigung verwendet wird.

19. Filtrationsverfahren nach Anspruch 13,
**dadurch gekennzeichnet,**
**dass** das Filtermaterial zu Filterbestandteilen gehört.

20. Filtrationsverfahren nach Anspruch 13,
**dadurch gekennzeichnet,**
**dass** das genannte, flüssige Medium Wasser, eine Wasserlösung oder eine Körperflüssigkeit darstellt.

21. Filter aus Filtermaterial,
**dadurch gekennzeichnet,**
**dass** als Filtermaterial ein Polymerkunststoff nach einem der Ansprüche 1 bis 5 gewählt wird.
